# EUROPÄISCHE PATENTSCHRIFT

(11) **EP 2 445 765 B1**
(45) Veröffentlichungstag und Bekanntmachung des Hinweises auf die Patenterteilung: **17.12.2014**
(21) Anmeldenummer: 10727394.8
(22) Anmeldetag: 18.06.2010
(51) Int. Cl.: B60T 7/12, B60T 8/00, B60T 17/22, F16D 65/00

(54) **ELEKTRONISCHES BREMSSYSTEM MIT EINER REIBUNGSBREMSE UMFASSEND REIBBELÄGE FÜR WENIGSTENS EINE RADBREMSE, UND MIT WENIGSTENS EINEM ELEKTRONISCHEN STEUERGERÄT**
ELECTRONIC BRAKING SYSTEM HAVING A FRICTION BRAKE COMPRISING FRICTION LININGS FOR AT LEAST ONE WHEEL BRAKE, AND HAVING AT LEAST ONE ELECTRONIC CONTROL DEVICE
SYSTÈME DE FREINAGE ÉLECTRONIQUE PRÉSENTANT UN FREIN À FRICTION COMPRENANT DES GARNITURES DE FRICTION POUR AU MOINS UN FREIN DE ROUE, ET PRÉSENTANT AU MOINS UN APPAREIL DE COMMANDE ÉLECTRONIQUE

(30) Priorität: 23.06.2009 DE 102009027122; 08.02.2010 DE 102010001676
(43) Veröffentlichungstag der Anmeldung: 02.05.2012
(73) Patentinhaber: Continental Teves AG & Co. oHG, 60488 Frankfurt (DE)
(72) Erfinder: WIENS, Eduard, Edelsberg 35796 (DE); PUFF, Rüdiger, 65510 Hünstetten-Wallbach (DE); BAUER, Oleg, 35396 Gießen (DE)
(86) Internationale Anmeldenummer: PCT/EP2010/058646
(87) Internationale Veröffentlichungsnummer: WO 2010/149592

(56) Entgegenhaltungen:
- WO-A1-2004/101338
- DE-A1- 10 228 115
- DE-A1- 10 338 564
- DE-A1-102006 013 509
- US-A1- 2004 130 211

## Beschreibung

Die Erfindung betrifft ein elektronisches Bremssystem mit Reibbelägen und ein zugehöriges Betriebsverfahren für ein elektronisches Bremssystem, insbesondere ein fremdansteuerbares Feststellbremssystem gemäß den Merkmalen vom Oberbegriff vom Patentanspruch 1.

Derartige elektronische Bremssysteme sind grundsätzlich aus der WO 2004/101338 A1, aus der DE 103 38 564 A1 wie auch aus der US 2004/130211 A1 bekannt. Prinzipiell werden Reibungsbremsen mit Reibbelägen eingesetzt, die einen Reibring einer Bremsscheibe oder eine Reibfläche einer Bremstrommel beaufschlagen. Der Reibbelag ist auf einem Träger wie beispielsweise auf einer Trägerplatte oder auf einem Bremsschuh aufgebracht. Ein fabrikneuer Reibbelag kann aus verschiedenen Gründen mit einem Überzug oder mit einer Lackierung versehen sein. Beispielsweise kann die Lackierung dazu dienen, das äußere Erscheinungsbild des Reibbelags oder auch der Trägerplatte in Hinblick auf sichtbare Flächen - beispielsweise im eingebauten Zustand innerhalb einer Radbremse - zu verbessern. Ein technischer Grund für einen Überzug bei einer Trommelbremse kann darin gesehen werden, unerwünschte Korrosionsprozesse zwischen der eigentlichen Reibfläche vom Reibbelag und einer Reibfläche der metallischen Bremstrommel oder Bremsscheibe zumindest temporär zu vermeiden. Ein technischer Nachteil von Lack oder Überzug kann dadurch gegeben sein, dass die Reibeigenschaften des Reibbelages beeinflusst werden. Ganz unabhängig von Überzug oder Lackierung erhält eine Reibpaarung deren vollständige Reibwirkung erst nach einigen Bremsbetätigungen. Ursache dafür ist, dass Setz- und Einebnungsvorgänge der beteiligten Reibpartner stattfinden müssen, in deren Zusammenhang sich das Tragverhalten der Reibpartner angleicht. In Abhängigkeit von dem Fahr- und Bremsbetätigungsverhalten kann sich ein derartiger Einschleifvorgang im regulären Kraftfahrzeugbremsbetrieb über einen längeren Zeitraum hinziehen. Üblicherweise erfordert dieser Einbremsvorgang eine besonders umsichtige Fahrweise nach einem Reibbelagwechsel, wobei beispielsweise Panikbremsungen zunächst vermieden werden sollten, um ein punktuelles Verglasen des Reibbelages zu vermeiden. Andererseits kann es zu dem Service einer Fachwerkstatt gehören, diesen Einschleifvorgang durchführen, indem eine Testfahrt mit Testbremsungen, und eine Überprüfung auf einem Bremsenprüfstand durchgeführt wird, bevor das Fahrzeug an den Kunden ausgehändigt wird.

Es ist ein Nachteil bekannter Vorgehensweisen, dass der Einschleifvorgang gewissermaßen individuell, und daher nicht reproduzierbar durchgeführt wird. In Folge dessen, kann es grundsätzlich vorkommen, dass ein Einschleifvorgang nicht ausreichend oder nicht mit der erforderlichen Sorgfalt durchgeführt wird. Grundsätzlich ist es auch denkbar, dass der Einschleifvorgang fehlerhaft ganz unterbleibt. Es ist eine Aufgabe der vorliegenden Erfindung, einen weiter verbesserten, ordnungsgemäßen Einschleifprozess sicherzustellen, und das Bremsverhalten von fabrikneuen Kraftfahrzeugen, oder von Kraftfahrzeugen deren Reibbeläge in einer Fachwerkstatt ausgetauscht wurden, reproduzierbar zu gestalten.

Die Aufgabe wird für eine gattungsgemäße Vorrichtung und für ein gattungsgemäßes Verfahren zusammen mit den Merkmalen der unabhängigen Patentansprüche gelöst. Demnach weist das Steuergerät eine Anzeigevorrichtung oder eine Schnittstelle zu einer Anzeigevorrichtung auf, wobei ein Ergebnis einer Einschleifroutine visuell darstellbar ist, so dass ein Werker oder Fahrer stets informiert ist. Ein Vorteil der vorliegenden Erfindung besteht darin, dass eine Mehrwertfunktion ermöglicht ist, die insbesondere softwaretechnisch auf Grundlage von unverzichtbaren Bestandteilen eines elektronischen Bremssystems im Fahrzeug umgesetzt werden kann.

Weitere Einzelheiten und vorteilhafte Ausgestaltungen der Erfindung gehen aus Unteransprüchen zusammen mit der Beschreibung anhand der Zeichnung hervor. In der Zeichnung zeigt:

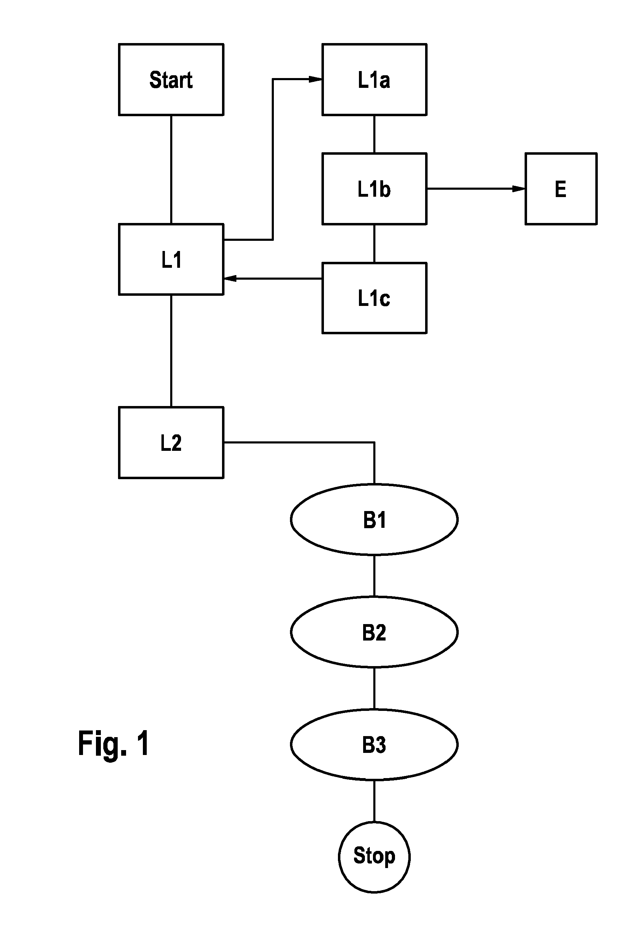

Fig. 1 schematisch Verfahrensschritte, und
Fig. 2 Strom- (I), Geschwindigkeits- (W) und Wegverläufe (s) über der Zeit (t)
Fig. 3 eine Einzelheit eines Strom-Zeit-Verlaufs über der Zeit (t) von Fig. 2, und
Fig. 4 schematisch sowie exemplarisch ein Hinterachs-Bremskreis von einem elektronisch geregelten Kraftfahrzeugbremssystem umfassend ein integriertes, elektromechanisches Feststellbremssystem EPB.

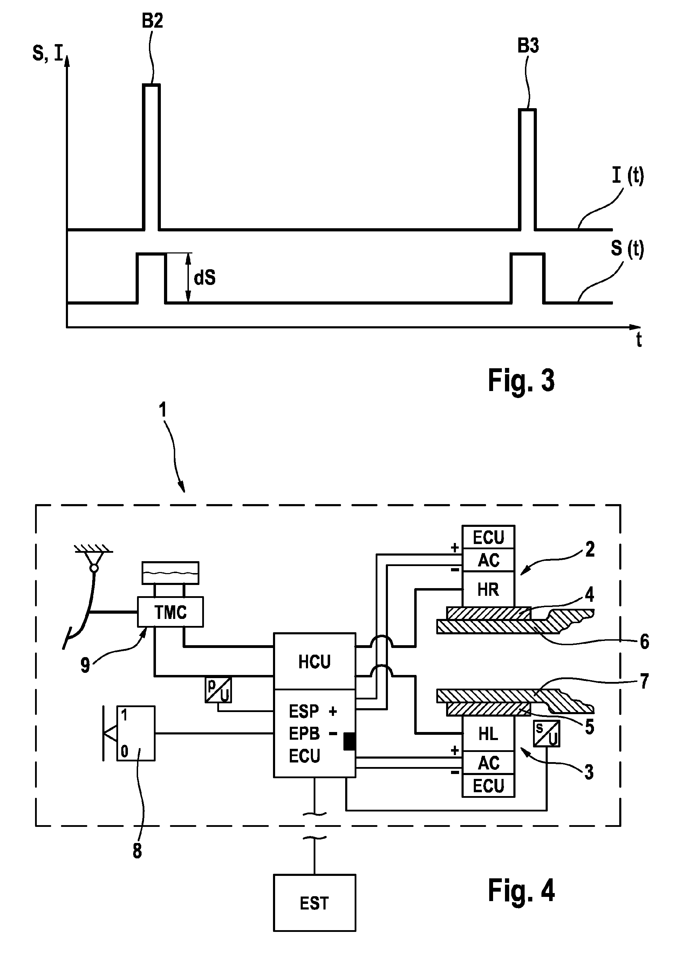

Ein elektronisch geregeltes Kraftfahrzeugbremssystem 1 mit hydraulischen Radbremsen 2,3 vom Reibungstyp, welche ganz grundsätzlich Reibbeläge 4,5 sowie zugeordnete Reibflächen im Bereich von Reibringen 6,7 oder Bremstrommeln aufweisen, verfügt weiterhin über ein elektrisches Betätigungsmittel 8 für einen Fahrzeugführer wie insbesondere über einen Schalter oder Taster für elektromechanische Aktuatorik AC der Radbremsen 2,3 sowie über eine hydraulische Bremsbetätigungseinheit 9 wie beispielsweise eine Hauptzylinder-Bremskraftverstärker-Einheit. Weiterhin sind Mittel für eine Fremdbetätigung vorgesehen, einschließlich Mittel zur Energieerzeugung wie insbesondere ein elektromotorisch angetriebenes Motor-Pumpen-Aggregat HCU, das insbesondere auch ESP-Fahrstabilitätsaufgaben übernimmt, und dafür eine elektronische Steuereinheit ESP-ECU mit einem elektronischen Steuer- und Regelprogramm für das Bremssystem 1 aufweist. Es handelt es sich insbesondere um ein integriertes Bremssystem, das sowohl eine hydraulische Radbremsaktuatorik und eine elektromechanische Radbremsaktuatorik miteinander verbindet. Dabei dient die elektromechanische Aktuatorik AC insbesondere dazu, um innerhalb eines integrierten elektromechanischen Feststellbremssystems EPB insbesondere fremdbetätigungsaufgaben zu erfüllen. Obwohl Fig. 4 in diesem Zusammenhang radindividuelle Aktuatorik AC zeigt, kann der elektromechanische Aktuator AC prinzipiell als elektromechanische Seilzugvorrichtung (EPB_CP), als hydraulisch und elektromechanisch betätigbarer, kombiniert betätigbarer Bremssattel (EPB CI) der den elektromechanischen Aktuator aufweist, oder als sogenannte elektromechanisch betätigbare Duo-Servo-Trommelbremsen (DSe) bis hin zu rein elektromechanisch betätigbaren Bremssätteln (EMB) ausgebildet sein, so dass die zeichnerische Verdeutlichung sinnbildlich zu verstehen ist.

Die elektronische Steuerung einer derartigen elektromechanisch betätigbaren Parkbremse EPB erfolgt bevorzugt durch eine integrierte elektronische Steuereinheit des Fahrstabilitätssystems ESP+EPB-ECU indem ein EPB-Steuergerät integriert vorgesehen ist. Alternativ ist es denkbar, dass das EPB-Parkbremssystem (Feststellbremssystem) eine gesondert vorgesehene, elektronische Steuereinheit aufweist, wobei es auch denkbar ist, das der oder die elektromechanischen Aktuatoren die elektronische Steuereinheit oder Bestandteile der elektronischen Steuereinheit aufweisen. Ganz grundsätzlich werden die elektromechanischen Parkbremssysteme EPB mit einer vorgegebenen Mindest-Zuspannkraft von beispielsweise rund 17 kN betrieben damit ein Kraftfahrzeug sicher abgestellt werden kann, und dieser Abstellvorgang weiterhin gesetzlich vorgeschriebenen Vorgaben oder Mindeststandards entspricht.

Obwohl die Erfindung prinzipiell für sämtliche fremdbetätigbaren elektronischen Bremssyteme anwendbar ist, eignet sich diese insbesondere für die Bremssysteme mit einer elektromechanischen Parkbremse EPB, um eine Einschleifroutine für neue Reibbeläge 4,5 zu ermöglichen. In diesem Zusammenhang wird erfindungsgemäß vorgeschlagen, dass das Bremssystem 1 wenigstens ein integriertes elektronisches Mittel zum automatisierten Einschleifen von Reibpartnern der Reibungsbremse aufweist. Der Einschleifvorgang wird demnach elektronisch automatisiert auf Grundlage von einem komplett am Fahrzeug montierten Bremssystem 1 vorgenommen, geregelt und überwacht, so dass fehlerhafte oder vergessene Einschleifroutinen eliminiert sind. Die Einschleifroutine ist folglich standardisiert reproduzierbar durchführbar, so dass eine Mehrwertfunktionalität erzielt ist. Die Produktqualität ist dadurch verbessert.

Es wird ganz grundsätzlich davon ausgegangen, dass die Einschleifroutine durchgeführt wird, während das betreffende Fahrzeugrad mit den einzuschleifenden Reibpartnern (Reibbelag 4,5, Reibring 6,7) mit konstanter Geschwindigkeit infolge einer Testfahrt oder infolge eines äußeren Antriebs, wie beispielsweise durch einen Bremsenprüfstand bei einem Fahrzeughersteller oder bei einer Fachwerkstatt, gedreht wird. In diesem Zusammenhang kann es insbesondere notwendig sein, dass die Aktivierung der Einschleifroutine bestimmte Sicherheits- oder Betriebsfunktionen der elektromechanischen Feststellbremse EPB, welche im normalen Fahrbetrieb die Fahrstabilität sicherstellen, zumindest temporär deaktiviert werden. Dazu kann insbesondere eine ESP-Fahrstabilitätsfunktion gehören, die eine Aktivierung einer elektromechanischen Hinterachs-Feststellbremse grundsätzlich verhindert, wenn eine bestimmte Fahrzeugreferenzgeschwindigkeit vref, respektive eine bestimmte Radgeschwindigkeit vRad der Räder einer Hinterachse überschritten ist, um Schleudervorgänge zu verhindern.

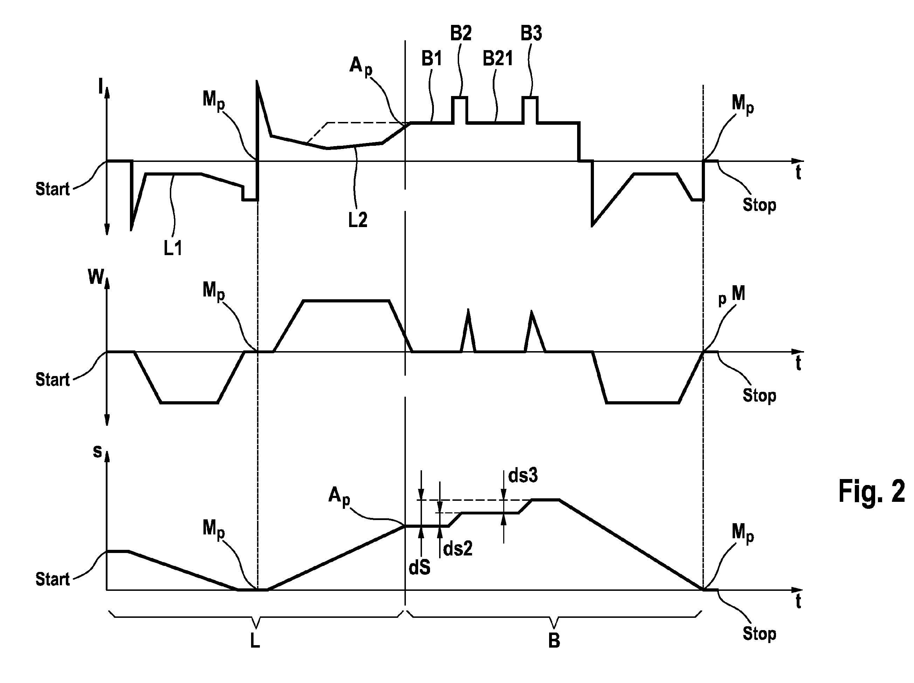

In weiterer Ausgestaltung der Erfindung ist vorgesehen, dass die Einschleifroutine als gesonderter Prozess in einer elektronischen Bremsbetätigungsstrategie implementiert, und in der zugeordneten Elektronikeinheit wie insbesondere der ESP+EPB-ECU softwaretechnisch hinterlegt ist. In diesem Zusammenhang kann die Einschleifroutine Parameter, wie insbesondere die Art und Weise einer Bremsbetätigung, und/oder eine Raddrehzahl während der Einschleifroutine, und/oder ein Raddrehmoment während der Einschleifroutine zumindest teilautomatisiert messen oder ermitteln, den oder die Parameter steuern und/oder regeln, insbesondere variieren und/oder eine Variation mehrerer Parameter gleichzeitig und reproduzierbar koordinieren. Ein wesentlicher Punkt ist, dass ein vollständig am Kraftfahrzeug montiertes, elektronisches Bremssystem 1 im Rahmen des erfindungsgemäßen Verfahrens als eigenständige Vorrichtung zur Durchführung einer elektronisch gesteuerten oder geregelten Einschleifroutine vorgesehen ist, so dass ein Einschleifvorgang, und eine gesonderte Vorrichtung außerhalb des Kraftfahrzeuges, grundsätzlich verzichtbar ist. Also kann erfindungsgemäß ein Aufwand an anderer Stelle rationalisiert werden. Dabei gibt das Steuergerät ESP+EPB-ECU während der Einschleifroutine wenigstens einen mittelbaren oder unmittelbaren Einschleifparameter vor, wie insbesondere eine Zuspannkraft, ein Reibmoment, eine Kombination sämtlicher Parameter oder gegebenenfalls sogar deren geändertes Profil in Abhängigkeit von der Zeit vor, was im Einzelnen beispielhaft aus den Fig. 2 und 3 hervorgeht.

Zu einer erfindungsgemäßen Einschleifroutine kann ganz grundsätzlich auch die Möglichkeit gehören, eine automatische Überwachung einer Zeitdauer tBedding der Einschleifroutine vorzusehen, wobei die konkrete Zeitdauer t vorgebbar sowie anpassbar ist, um eine flexible Adaption an unterschiedliche Anwendungsfälle, wie insbesondere an unterschiedliche Reibungsbremsentypen zu ermöglichen.

Eine besondere Mensch-Maschine-Schnittstelle oder die ohnehin vorhandenen Betätigungsmittel 8,9 können vorgesehen sein, und dazu dienen, die automatische Einschleifroutine zu aktivieren. In einer bevorzugten Ausführungsform ist die Aktivierung der Einschleifroutine geschützt oder codiert vorgesehen, um einen Missbrauch zu vermeiden. Zwecks Freischaltung kann eine Identifikation erforderlich sein, was beispielsweise durch zusätzliche Vernetzung vom elektronischen Steuergerät ESP+EPB-ECU mit einem zusätzlichen, externen Steuergerät (Leitrechner, Host, Serviceterminal) eines Automobilherstellers oder einer Fachwerkstatt, sowie durch einen Handshake auf Grundlage eines Austauschs von zertifizierten Protokolldaten ermöglicht sein kann.

Es kann vorgesehen sein, dass das elektronische Steuergerät ESP+ESC-ECU einen reservierten, adressierten, Speicherbereich aufweist, welcher dem elektromechanischen Aktuator AC vorbehalten ist, und wobei in den Speicherbereich Daten, nämlich insbesondere Ergebnisdaten von der Einschleifroutine abgelegt werden. Des weiteren ist eine visuelle Anzeigevorrichtung möglich, wobei das Steuergerät ESP+EPB-ECU über eine Schnittstelle zu der Anzeigevorrichtung derart verfügt, dass ein positiver oder negativer Abschluss einer durchgeführten Einschleifroutine visuell dargestellt werden kann. Ebenso ist es prinzipiell visuell darstellbar, wenn ein Einschleifvorgang gänzlich unterblieben ist. Es kann jedoch implementiert sein, dass ein Einschleifvorgang automatisch zu bestimmten Zeitpunkten, wie beispielsweise bei einer Erstinbetriebnahme des elektromechanischen Aktuators AC durchgeführt wird, um die Produktqualität und Prozesssicherheit des Bremssystems 1 zusätzlich zu steigern.

Es versteht sich, dass der Einschleifvorgang gesteuert oder geregelt durchgeführt werden kann, und dass diesbezüglich Messdaten erforderlich sind, und dem Steuergerät ESP+ESC-ECU zugeführt werden. Zu diesem Zweck ist das Steuergerät ESP+ESC-ECU elektrisch mit Sensoren und/oder Messschaltungen, wie insbesondere mit wenigstens einem Stromsensor, und/oder mit wenigstens einem Wegsensor, und/oder mit wenigstens einem Raddrehsensor s/u, und/oder mit wenigstens einem Kraftsensor oder wenigstens einem Druckssensor p/u verbunden. Demzufolge können die Betriebszustände von den Radbremsen 2,3 und/oder von den elektromechanischen Aktuatoren AC erfasst und für die Einschleifroutine weiterverarbeitet werden.

Wie insbesondere aus der Fig. 2 hervorgeht, verfügt ein erfindungsgemäßes Einschleifverfahren über mehrere unterscheidbare Phasen. Nach Start erfolgt eine Einlernphase L(L1,L2,L1a,L1b,L1c) zur Erkennung eines hinteren Anschlags Mp (Mp =mounting position) vom Aktuator. Mp wird durch Lösebetätigung des Aktuators erkannt und gegebenenfalls neu eingelernt und ggf. abgespeichert. Im Anschluss wird eine Zuspannbewegung ausgeführt, und ein Anlegepunkt (Ap) der beteiligten Reibpartner insbesondere durch Erkennung eines sprung- oder rampenartig gestiegenen Strombedarfs des elektromechanisch angetriebenen Aktuators AC oder durch Blockieren des Aktuators AC automatisch durch das Steuergerät ESP+ESC-ECU erkannt und gegebenenfalls dieser Anlegepunkt (Ap) eingelernt und ggf. abgespeichert. Daran schließt sich eine Einschleifphase B (B1" B21,B2,B3) an, während der sukzessive das Einschleifen der Reibpartner erfolgt. In diesem Zusammenhang wird im Anschluss an eine Phase B1,B21 mit im Wesentlichen konstantem Strom wenigstens eine bevorzugt impulsartig verstärkte Anlage (Fig. 2, B2,B3) der Reibpartner durch erneute Betätigung vorgenommen, was sich in erhöhten Weginkrementen dS2, ds3 manifestiert. Es ist möglich, die Zuspannkraft während der Einschleifphase mehrfach wiederholt impulsartig auf- sowie abzubauen, um den Einschleifvorgang zusätzlich dosiert zu intensivieren. Eine erfolgte, und auch erfolgreich abgeschlossene, Einschleifroutine, oder eine nicht erfolgreich abgeschlossene Einschleifroutine kann visuell durch eine Anzeigevorrichtung angezeigt werden. Grundsätzlich gleiches gilt für einen nicht erfolgreichen oder unterbliebenen Einschleifvorgang, was als Fehler E verdeutlicht werden kann.

Als Abschluß der Einschleifphase B wird der Aktuator gemäß Fig. 2 wieder automatisch in den rückwärtigen Anschlag Mp gebracht und das Verfahren beendet (Stop).

Unabhängig von einem Reibbelagwechsel, oder von einer Erstinbetriebnahme eines Bremssystems 1 in einem Neufahrzeug, kann das erfindungsgemäße, reproduzierbare, Einschleifen von Reibbeläge prinzipiell auch automatisch angewendet werden, wenn beispielsweise eine betätigte (verriegelte) elektromechanische Feststellbremsanlage EPB über eine längere Zeitdauer nicht gelöst worden ist, und das Steuergerät ESP+ESC-ECU einen Befehl zum Lösen der Feststellbremsanlage erhält. Durch diese Maßnahme wird es ganz gezielt sowie nach Bedarf ermöglicht, die Reibkontaktflächen von Korrosionsprodukten zu befreien, ohne einen unnötigen Verschleiß der Reibbeläge 4,5 zu erzeugen.

Die Erfindung erstreckt sich insbesondere auch auf ein gesondertes, beispielsweise für eine Fachwerkstatt bestimmtes, Steuergerät EST, das zur Verbindung mit dem elektronischen Steuergerät ESC+EPB-ECU vorgesehen ist, und insbesondere dazu dienen kann, die Einschleifroutine durch autorisiertes Personal zu aktivieren.

### Bezugszeichenliste

1 Bremssystem
2,3 Radbremse
4,5 Reibbelag
6,7 Reibring
8 Betätigungsmittel
9 Betätigungseinheit

AC elektromechanischer Actuator
EPB + ESC - ECU Steuergerät
p/u Drucksensor
s/u Weg- oder Drehzahlsensor
HCU Hydraulikaggregat
EST Steuergerät
TMC Hauptbremszylinder
Mp Anschlag
Ap Anlegepunkt
t Zeit
s Weg
I Strom
dS, ds1, ds2 Weginkrement
L1,L1a,L1b,L1c,L2 Einlernphase
B1,B2,B21,B3 Einschleifphase

## Patentansprüche

1. Elektronisches Bremssystem (1) mit einer Reibungsbremse umfassend Reibbeläge (4,5) für wenigstens eine Radbremse (2,3), und mit wenigstens einem elektronischen Steuergerät (ECU), und wenigstens ein integriertes elektronisches Mittel (ESP+EPB-ECU) zur automatisierten Inbetriebnahme, insbesondere zum Einschleifen von Reibpartnern der Reibungsbremse, **dadurch gekennzeichnet dass** das Steuergerät (ESP+ESC-ECU) eine Anzeigevorrichtung oder eine Schnittstelle zu einer Anzeigevorrichtung aufweist, und dass ein Ergebnis einer Einschleifroutine visuell darstellbar ist.

2. Elektronisches Bremssystem (1) mit einer Reibungsbremse umfassend Reibbeläge (4,5) für wenigstens eine Radbremse (2,3), und mit wenigstens einem elektronischen Steuergerät (ECU) nach Anspruch 1, **dadurch gekennzeichnet, dass** das Bremssystem eine gesonderte, elektronisch geregelte Einschleifroutine aufweist, und dass die Einschleifroutine Einschleifparameter wie insbesondere eine Zuspannkraft und/oder eine Raddrehzahl und/oder ein Raddrehmoment während der Einschleifroutine zumindest teilautomatisiert erfasst.

3. Elektronisches Bremssystem (1) mit einer Reibungsbremse umfassend Reibbeläge (4,5) für wenigstens eine Radbremse (2,3), und mit wenigstens einem elektronischen Steuergerät (ECU) nach Anspruch 1 oder 2, **dadurch gekennzeichnet dass** ein vollständig am Kraftfahrzeug montiertes Bremssystem (1) als Vorrichtung für eine elektronisch gesteuerte oder geregelte Einschleifroutine vorgesehen ist, und wobei die Einschleifroutine wenigstens einen mittelbar oder unmittelbar vorgegebenen Einschleifparameter, nämlich eine Zuspannkraft oder eine Reibmomentvorgabe oder ein Profil von Einschleifparametern (I,W,s) in Abhängigkeit von der Zeit (t) vorgibt.

4. Elektronisches Bremssystem (1) mit einer Reibungsbremse umfassend Reibbeläge (4,5) für wenigstens eine Radbremse (2,3), und mit wenigstens einem elektronischen Steuergerät (ECU) nach Anspruch 2, **dadurch gekennzeichnet dass** eine automatische Überwachung der Zeitdauer (t) der Einschleifroutine vorgesehen ist, und dass die Zeitdauer (t) vorgebbar ist.

5. Elektronisches Bremssystem (1) mit einer Reibungsbremse umfassend Reibbeläge (4,5) für wenigstens eine Radbremse (2,3), und mit wenigstens einem elektronischen Steuergerät (ECU) nach einem oder mehreren der vorhergehenden Ansprüche, **dadurch gekennzeichnet dass** Mittel, insbesondere Betätigungsmittel (8,9), zur Aktivierung der Einschleifroutine vorgesehen sind.

6. Elektronisches Bremssystem (1) mit einer Reibungsbremse umfassend Reibbeläge (4,5) für wenigstens eine Radbremse (2,3), und mit wenigstens einem elektronischen Steuergerät (ECU) nach einem oder mehreren der vorhergehenden Ansprüche, **dadurch gekennzeichnet dass** das Steuergerät (ESP+ESC-ECU) einen Speicherbereich aufweist, und dass in dem Speicherbereich Daten, nämlich Ergebnisdaten von der Einschleifroutine abgelegt sind.

7. Elektronisches Bremssystem (1) mit einer Reibungsbremse umfassend Reibbeläge (4,5) für wenigstens eine Radbremse (2,3) und mit wenigstens einem elektronischen Steuergerät (ECU), nach einem oder mehreren der vorhergehenden Ansprüche, **dadurch gekennzeichnet dass** das Bremssystem (1) wenigstens einen elektrisch fremdbetätigbaren Aktuator (AC), nämlich eine elektrisch angesteuerte Pumpe für eine hydraulische Radbremse (2,3), oder einen elektromechanischen Aktuator (AC), wie insbesondere eine kombinierte, elektromechanisch betätigbare Radbremse (2,3) oder eine elektromechanische Seilzugvorrichtung, oder eine elektromechanisch betätigbare Duo-Servo-Radbremse (2,3), oder einen fremdansteuerbaren Bremskraftverstärker, zur Erzeugung einer elektronisch geregelten Zuspannkraft aufweist.

8. Elektronisches Bremssystem (1) mit einer Reibungsbremse umfassend Reibbeläge (4,5) für wenigstens eine Radbremse (2,3), und mit wenigstens einem elektronischen Steuergerät (ECU), nach einem oder mehreren der vorhergehenden Ansprüche, **dadurch gekennzeichnet dass** das Steuergerät (ESP+ESC-ECU) elektrisch mit Sensoren und/oder Messschaltungen, wie insbesondere mit wenigstens einem Stromsensor, und/oder mit wenigstens einem Wegsensor, und/oder mit wenigstens einem Raddrehsensor (s/u), und/oder mit wenigstens einem Kraftsensor oder wenigstens einem Druckssensor (p/u) verbunden ist, um Betriebszustände von der Radbremse (2,3) und/oder von dem elektromechanischen Aktuator (AC) zu erfassen.

9. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ECU), insbesondere zum Betrieb eines elektronischen Bremssystems (1) nach einem oder mehreren der Ansprüche 1-8, **dadurch gekennzeichnet, dass** eine automatisierte, elektronisch gesteuerte oder elektronisch geregelte Routine zum Einschleifen von Reibpartnern der Reibungsbremse vorgesehen ist, dass die automatisierte Einschleifroutine nach einer Freigabe, insbesondere nach einer Eingabe eines Freischaltcodes, oder nach elektronischer Verbindung einer Schnittstelle vom Steuergerät (ESP+ESC-ECU) des Bremssystems (1) mit einem gesonderten Steuergerät (EST), gestartet und automatisch abgearbeitet wird, und dass Ergebnisdaten der Einschleifroutine in einem Speicherbereich des Steuergerätes (ESP+ESC-ECU) abgespeichert werden.

10. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach Anspruch 9, **dadurch gekennzeichnet, dass** die Einschleifroutine als ein gesonderter Bestandteil eines, in dem Steuergerät (ESP+ESC-ECU) des Bremssystems (1) abgelegten, Verfahrens zum Betätigen eines elektromechanischen Aktuators (AC) vorgesehen ist.

11. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach einem oder mehreren der vorhergehenden Ansprüche, **dadurch gekennzeichnet, dass** während der Einschleifroutine Messvorgänge durchgeführt werden, und dass Messdaten der Messvorgänge an das Steuergerät (ESP+ESC-ECU) weitergeleitet und dort elektronisch verarbeitet werden.

12. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach einem oder mehreren der vorhergehenden Ansprüche, **dadurch gekennzeichnet, dass** die Einschleifroutine mehrere Phasen, nämlich eine Einlernphase (2,2a,2b,2c) zur Erkennung eines ersten Anlegepunktes (Mp) der Reibpartner, sowie eine zeitlich daran anschließende Einschleifphase (B1,B2,B3) zum Einschleifen der Reibpartner aufweist, wobei ein Anlegepunkt (Mp) der beteiligten Reibpartner durch Messung eines rampenartig erhöhten Stromanstiegs eines elektromechanisch angetriebenen Aktuators (AC) oder durch Blockieren des Aktuators (AC) automatisch durch die Steuereinheit (ESP+ESC-ECU) erkannt oder eingelernt wird, und wobei während der anschließenden Einschleifphase (B1,B2,B3) eine impulsartig erhöhte Zuspannkraft vorgesehen ist.

13. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach einem oder mehreren der vorhergehenden Ansprüche, **dadurch gekennzeichnet, dass** die Zuspannkraft während der Einschleifphase (B1,B2,B3) wiederholt impulsartig auf- sowie abgebaut wird.

14. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach einem oder mehreren der vorhergehenden Ansprüche, **dadurch gekennzeichnet, dass** eine erfolgreich abgeschlossene Einschleifroutine, oder eine nicht erfolgreich abgeschlossene Einschleifroutine gemeldet wird.

15. Betriebsverfahren für ein elektronisch geregeltes Bremssystem (1) mit einer Reibungsbremse, umfassend Reibbeläge (4,5) für wenigstens eine Radbremse (2,3), und mit wenigstens einem elektronischen Steuergerät (ESP+ESC-ECU) nach einem oder mehreren der vorhergehenden Ansprüche, **dadurch gekennzeichnet, dass** infolge einer Aktivierung der Einschleifroutine zumindest eine Betriebsfunktion des Bremssystems (1), die im Fahrbetrieb dazu beiträgt, Fahrstabilität sicherzustellen, automatisch deaktiviert wird, und dass die Betriebsfunktion bei abgeschlossener Einschleifroutine automatisch reaktiviert wird.

## Claims

1. Electronic brake system (1) having a friction brake comprising friction linings (4,5) for at least one wheel brake (2,3), and having at least one electronic control device (ECU), and at least one integrated electronic means (ESP+EPB-ECU) for automated activation, in particular for bedding in friction partners of the friction brake **characterized in that** the control device (ESP+ESC-ECU) has a display device or an interface with a display device, and **in that** a result of a bedding in routine can be displayed visually.

2. Electronic brake system (1) having a friction brake comprising friction linings (4,5) for at least one wheel brake (2,3), and having at least one electronic control device (ECU), as claimed in Claim 1, **characterized in that** the brake system has a separate, electronically controlled bedding in routine, and **in that** the bedding in routine detects bedding in parameters such as, in particular, a brake application force and/or a wheel speed and/or a wheel torque in an at least partially automated fashion during the bedding in routine.

3. Electronic brake system (1) having a friction brake comprising friction linings (4,5) for at least one wheel brake (2,3), and having at least one electronic control device (ECU), as claimed in Claim 1 or 2, **characterized in that** a brake system (1) which is mounted completely on the motor vehicle is provided as a device for an electronically open-loop or closed-loop controlled bedding in routine, and wherein the bedding in routine predefines at least one indirectly or directly predefined bedding in parameter, specifically a brake application force or a predefined friction torque or a profile of bedding in parameters (I,W,s) as a function of the time (t) .

4. Electronic brake system (1) having a friction brake comprising friction linings (4,5) for at least one wheel brake (2,3), and having at least one electronic control device (ECU), as claimed in Claim 2, **characterized in that** automatic monitoring of the time period (t) of the bedding in routine is provided, and **in that** the time period (t) can be predefined.

5. Electronic brake system (1) having a friction brake comprising friction linings (4,5) for at least one wheel brake (2,3), and having at least one electronic control device (ECU), as claimed in one or more of the preceding claims, **characterized in that** means, in particular actuation means (8,9), are provided for activating the bedding in routine.

6. The electronic brake system (1) having a friction brake comprising friction linings (4,5) for at least one wheel brake (2,3), and having at least one electronic control device (ECU), as claimed in one or more of the preceding claims, **characterized in that** the control device (ESP+ESC-ECU) has a storage area, and **in that** data, specifically result data from the bedding in routine, are stored in the storage area.

7. Electronic brake system (1) having a friction brake comprising friction linings (4,5) for at least one wheel brake (2,3), and having at least one electronic control device (ECU), as claimed in one or more of the preceding claims, **characterized in that** the brake system (1) has at least one electrically externally actuable actuator (AC), specifically an electrically actuated pump for a hydraulic wheel brake (2,3), or an electromechanical actuator (AC) such as, in particular, a combined, electromechanically actuable wheel brake (2,3) or an electromechanical Bowden cable device, or an electromechanically actuable Duo-Servo wheel brake (2,3), or an externally actuable brake booster, for generating an electronically controlled brake application force.

8. Electronic brake system (1) having a friction brake comprising friction linings (4,5) for at least one wheel brake (2,3), and having at least one electronic control device (ECU), as claimed in one or more of the preceding claims, **characterized in that** the control device (ESP+ESC-ECU) is electrically connected to sensors and/or measuring circuits such as, in particular, to at least one current sensor, and/or to at least one travel sensor, and/or to at least one wheel rotation sensor (s/u), and/or to at least one force sensor or at least one pressure sensor (p/u), in order to detect operating states of the wheel brake (2,3) and/or of the electromechanical actuator (AC).

9. Operating method for an electronically controlled brake system (1) having a friction brake, comprising fiction linings (4,5) for at least one wheel brake (2,3), and having at least one electronic control device (ECU), in particular for operating an electronic brake system (1) as claimed in one or more of Claims 1-8, **characterized in that** an automated, electronically open-loop controlled or electronically closed-loop controlled routine for bedding in friction partners of the friction brake is provided, **in that** the automated bedding in routine is started and processed automatically after an enable, in particular after an input of an enable code, or after electronic connection of an interface of the control device (ESP+ESC-ECU) of the brake system (1) to a separate control device (EST), and **in that** result data of the bedding in routine are stored in a storage area of the control device (ESP+ESC-ECU).

10. Operating method for an electronically controlled brake system (1) having a friction brake, comprising fiction linings (4,5) for at least one wheel brake (2,3), and having at least one electronic control device (ESP+ESC-ECU), as claimed in Claim 9, **characterized in that** the bedding in routine is provided as a separate component of a method for activating an electromechanical actuator (AC), which method is stored in the control device (ESP+ESC-ECU) of the brake system (1).

11. Operating method for an electronically controlled brake system (1) having a friction brake, comprising fiction linings (4,5) for at least one wheel brake (2,3), and having at least one electronic control device (ESP+ESC-ECU), as claimed in one or more of the preceding claims, **characterized in that** measuring processes are carried out during the bedding in routine, and **in that** measurement data of the measuring processes are passed on to the control device (ESP+ESC-ECU) and electronically processed there.

12. Operating method for an electronically controlled brake system (1) having a friction brake, comprising fiction linings (4,5) for at least one wheel brake (2,3), and having at least one electronic control device (ESP+ESC-ECU), as claimed in one or more of the preceding claims, **characterized in that** the bedding in routine has a plurality of phases, specifically a learning phase (2,2a,2b,2c) for detecting a first engagement point (Mp)of the friction partners, and a chronologically adjoining bedding in phase (B1,B2,B3) for bedding in the friction partners, wherein an engagement point (Mp) of the involved friction partners is detected or learnt automatically by the control device (ESP+ESC-ECU) by measuring a rise in current, increased in a ramp-like fashion, of an electromechanically driven actuator (AC) or by blocking the actuator (AC), and wherein a brake application force which is increased in a pulse-like fashion is provided during the subsequent bedding in phase (B1,B2,B3).

13. Operating method for an electronically controlled brake system (1) having a friction brake, comprising fiction linings (4,5) for at least one wheel brake (2,3), and having at least one electronic control device (ESP+ESC-ECU), as claimed in one or more of the preceding claims, **characterized in that** the brake application force is repeatedly increased and decreased in a pulse-like fashion during the bedding in phase (B1, B2, B3).

14. Operating method for an electronically controlled brake system (1) having a friction brake, comprising fiction linings (4,5) for at least one wheel brake (2,3), and having at least one electronic control device (ESP+ESC-ECU), as claimed in one or more of the preceding claims, **characterized in that** a successfully concluded bedding in routine or a bedding in routine which is not successfully concluded is reported.

15. Operating method for an electronically controlled brake system (1) having a friction brake, comprising fiction linings (4,5) for at least one wheel brake (2,3), and having at least one electronic control device (ESP+ESC-ECU), as claimed in one or more of the preceding claims, **characterized in that**, owing to activation of the bedding in routine, at least one operating function of the brake system (1), which contributes during the driving mode to ensuring driving stability, is deactivated automatically, and **in that** the operating function is automatically reactivated when the bedding in routine is concluded.

## Revendications

1. Système de frein électronique (1) comprenant un frein à friction incluant des garnitures de friction (4, 5) pour au moins un frein de roue (2, 3), et comprenant au moins un contrôleur électronique (ECU) et au moins un moyen électronique intégré (ESP + ESb - ECU) servant à la mise en service automatisée, servant notamment au rodage de partenaires de friction du frein à friction, **caractérisé en ce que** le contrôleur (ESP + ESC - ECU) possède un dispositif d'affichage ou une interface vers un dispositif d'affichage, et **en ce qu'**un résultat d'une routine de rodage peut être représenté visuellement.

2. Système de frein électronique (1) comprenant un frein à friction incluant des garnitures de friction (4, 5) pour au moins un frein de roue (2, 3), et comprenant au moins un contrôleur électronique (ECU) selon la revendication 1, **caractérisé en ce que** le système de frein possède une routine de rodage à régulation électronique distincte, et **en ce que** la routine de rodage acquiert des paramètres de rodage tels que, notamment, une force d'application de frein et/ou une vitesse de rotation de roue et/ou un couple de roue de manière au moins partiellement automatisée pendant la routine de rodage.

3. Système de frein électronique (1) comprenant un frein à friction incluant des garnitures de friction (4, 5) pour au moins un frein de roue (2, 3), et comprenant au moins un contrôleur électronique (ECU) selon la revendication 1 ou 2, **caractérisé en ce qu'**un système de frein (1) entièrement monté sur le véhicule automobile est prévu en tant qu'appareil pour une routine de rodage à commande ou à régulation électronique, et la routine de rodage prédéfinissant au moins un paramètre de rodage prédéfini indirectement ou directement, à savoir une force d'application de frein ou une indication de moment de friction ou un profil de paramètres de rodage (I, W, s) en fonction du temps (t) .

4. Système de frein électronique (1) comprenant un frein à friction incluant des garnitures de friction (4, 5) pour au moins un frein de roue (2, 3), et comprenant au moins un contrôleur électronique (ECU) selon la revendication 2, **caractérisé en ce qu'**une surveillance automatique de la durée (t) de la routine de rodage est prévue, et **en ce que** la durée (t) peut être prédéfinie.

5. Système de frein électronique (1) comprenant un frein à friction incluant des garnitures de friction (4, 5) pour au moins un frein de roue (2, 3), et comprenant au moins un contrôleur électronique (ECU) selon une ou plusieurs des revendications précédentes, **caractérisé en ce que** sont prévus des moyens, notamment des moyens d'actionnement (8, 9), destinés à l'activation de la routine de rodage.

6. Système de frein électronique (1) comprenant un frein à friction incluant des garnitures de friction (4, 5) pour au moins un frein de roue (2, 3), et comprenant au moins un contrôleur électronique (ECU) selon une ou plusieurs des revendications précédentes, **caractérisé en ce que** le contrôleur (ESP + ESC - ECU) possède une zone de mémoire, et **en ce que** dans la zone de mémoire sont enregistrées des données, à savoir des données de résultat de la routine de rodage.

7. Système de frein électronique (1) comprenant un frein à friction incluant des garnitures de friction (4, 5) pour au moins un frein de roue (2, 3), et comprenant au moins un contrôleur électronique (ECU) selon une ou plusieurs des revendications précédentes, **caractérisé en ce que** le système de frein (1) possède au moins un actionneur (AC) pouvant être actionné électriquement à distance, à savoir une pompe à commande électrique pour un frein de roue (2, 3) hydraulique, ou un actionneur (AC) électromécanique, comme notamment un frein de roue (2, 3) combiné pouvant être actionné de façon électromécanique ou un appareil électromécanique à câble de commande, ou encore un frein de roue (2, 3) à double asservissement pouvant être actionné de façon électromécanique, ou un servofrein commandable à distance, servant à générer une force d'application de frein régulée électroniquement.

8. Système de frein électronique (1) comprenant un frein à friction incluant des garnitures de friction (4, 5) pour au moins un frein de roue (2, 3), et comprenant au moins un contrôleur électronique (ECU) selon une ou plusieurs des revendications précédentes, **caractérisé en ce que** le contrôleur (ESP + ESC - ECU) est relié électriquement à des capteurs et/ou des circuits de mesure, comme notamment à au moins un capteur de courant, et/ou à au moins un capteur de course et/ou à au moins un capteur de rotation de roue (s/u) et/ou à au moins un capteur de force ou au moins un capteur de pression (p/u), afin d'acquérir des états opérationnels du frein de roue (2, 3) et/ou de l'actionneur (AC) électromécanique.

9. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ECU), notamment pour faire fonctionner un système de frein électronique (1) selon une ou plusieurs des revendications 1 à 8, **caractérisé en ce qu'**il est prévu une routine automatisée à commande électronique ou à régulation électronique servant au rodage de partenaires de friction du frein à friction, **en ce que** la routine de rodage automatisée est démarrée et exécutée automatiquement après une validation, notamment après une saisie d'un code de libération, ou après la connexion électronique d'une interface du contrôleur (ESP + ESC - ECU) du système de frein (1) avec un contrôleur distinct (EST), et **en ce que** les données de résultat de la routine de rodage sont mises en mémoire dans une zone de mémoire du contrôleur (ESP + ESC - ECU) .

10. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon la revendication 9, **caractérisé en ce que** la routine de rodage est prévue en tant que composant distinct d'un procédé d'actionnement d'un actionneur (AC) électromécanique qui est enregistré dans le contrôleur (ESP + ESC - ECU) du système de frein (1).

11. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon une ou plusieurs des revendications précédentes, **caractérisé en ce que** pendant la routine de rodage sont exécutées des opérations de mesure, et **en ce que** les données de mesure des opérations de mesure sont transférées au contrôleur (ESP + ESC - ECU) et y sont traitées électroniquement.

12. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon une ou plusieurs des revendications précédentes, **caractérisé en ce que** la routine de rodage possède plusieurs phases, à savoir une phase d'apprentissage (2, 2a, 2b, 2c) destinée à la reconnaissance d'un premier point d'application (Mp) des partenaires de friction, ainsi qu'une phase de rodage (B1, B2, B3) qui la suit dans le temps destinée au rodage des partenaires de friction, un point d'application (Mp) des partenaires de friction participants étant reconnu ou appris automatiquement par l'unité de commande (ESP + ESC - ECU) par le biais de la mesure d'une augmentation accrue à la manière d'une rampe du courant d'un actionneur (AC) à entraînement électromécanique ou par le biais d'un blocage de l'actionneur (AC), et une force d'application de frein accrue de manière impulsionnelle étant prévue pendant la phase de rodage (B1, B2, B3) qui suit.

13. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon une ou plusieurs des revendications précédentes, **caractérisé en ce que** la force d'application de frein est appliquée puis relâchée de manière impulsionnelle et répétitive pendant la phase de rodage (B1, B2, B3).

14. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon une ou plusieurs des revendications précédentes, **caractérisé en ce que** la réussite d'une routine de rodage achevée ou l'échec d'une routine de rodage achevée est signalé (e) .

15. Procédé de fonctionnement pour un système de frein à régulation électronique (1) comprenant un frein à friction incluant des garnitures de friction (4, 5) pour au moins un frein de roue (2, 3), et comprenant au moins un contrôleur électronique (ESP + ESC - ECU) selon une ou plusieurs des revendications précédentes, **caractérisé en ce que** suite à une activation de la routine de rodage, au moins une fonction de service du système de frein (1) qui, en régime de conduite, contribue à garantir la stabilité de conduite est désactivée automatiquement, et **en ce que** la fonction de service est réactivée automatiquement lorsque la routine de rodage est achevée.
